(19) Europäisches Patentamt
European Patent Office
Office européen des brevets

(11) **EP 4 786 137 A1**

(12) **EUROPÄISCHE PATENTANMELDUNG**

(43) Veröffentlichungstag:
05.08.2026  Patentblatt 2026/32

(21) Anmeldenummer: 25215734.2

(22) Anmeldetag: **13.11.2025**

(51) Internationale Patentklassifikation (IPC):
*B29C 48/08* (2019.01)   *B29C 48/27* (2019.01)
*B29C 48/14* (2019.01)   *B29C 48/88* (2019.01)
*B08B 5/02* (2006.01)    *B08B 1/20* (2024.01)

(52) Gemeinsame Patentklassifikation (CPC):
**B29C 48/0018; B08B 1/20; B08B 5/026;
B29C 48/08; B29C 48/1476; B29C 48/274;
B29C 48/914; B29C 48/919**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **21.11.2024  DE 102024134338**

(71) Anmelder: **Brückner Maschinenbau GmbH
83313 Siegsdorf (DE)**

(72) Erfinder:
• **EDFELDER, Anton
83246 Unterwössen (DE)**
• **GIAPOULIS, Anthimos
83278 Traunstein (DE)**

(74) Vertreter: **Flach Bauer & Partner
Patentanwälte mbB
Adlzreiterstraße 11
83022 Rosenheim (DE)**

(54) **WASSERENTFERNUNGSVORRICHTUNG**

(57)    Die vorliegende Erfindung betrifft eine Wasserentfernungsvorrichtung 200 zur Entfernung von Wasser von einer Folie, eine Cast-Vorrichtung 14 umfassend eine Wasserentfernungsvorrichtung und eine Anlage 10 zur Herstellung einer Folie, umfassend eine entsprechende Cast-Vorrichtung. Die Wasserentfernungsvorrichtung 200 umfasst zumindest eine mechanische Wasserentfernungseinrichtung sowie eine erste Abblasvorrichtung und eine zweite Abblasvorrichtung, welche jeweils Abblasdüsen umfassen, wobei die Abblasdüsen 220a, 220c; 222a, 222b dazu eingerichtet sind, einen Luftstrom L auf die Folie zu richten, um mitgeschlepptes Wasser von der Folie F über einen Folienrand abzublasen.

**Fig. 2**

## Beschreibung

### Gebiet der Erfindung

Die Erfindung betrifft eine Wasserentfernungsvorrichtung zur Entfernung von Wasser von einer Folie, eine Cast-Vorrichtung umfassend eine Wasserentfernungsvorrichtung und eine Anlage zur Herstellung einer Folie, umfassend eine entsprechende Cast-Vorrichtung.

### Hintergrund

Bei der Herstellung von dünnen Kunststofffolien wird zunächst eine Kunststoffschmelze extrudiert und auf eine Kühlwalze aufgebracht, auf der sie abkühlt und zumindest teilweise erstarrt (Cast-Folie). Um die extrudierte Folie bzw. Cast-Folie zu Kühlen und anschließend einer Reckanlage zuführen zu können, wird die extrudierte Folie typischerweise durch ein Wasserbad geführt.

Das Wasserbad führt zu einer homogenen und schnellen Kühlung, allerdings muss das Wasser von der Folie entfernt werden, bevor die Folie der Reckanlage, insbesondere einer Längsreckanlage zugeführt wird.

Diese Wasserentfernung ist wichtig, da mit der Folie verschlepptes Wasser in die Reckanlage gelangen und dort verdampfen könnte. Typischerweise umfasst eine Längsreckanlage beheizte Walzen. Wasser, das sich noch auf der Folienoberfläche befindet würde auf diesen Walzen verdampfen, wodurch zwischen der Folie und der Walze Dampfblasen entstehen. Diese Dampfblasen heben die Folie von der Walze ab und verhindern, dass die Folie homogen erwärmt wird. Somit wird das Reckergebnis beeinträchtigt. Eine schlechte Folienqualität oder sogar Folienabrisse wären die Folge.

Zudem führt das Verdampfen des Wassers auf den Walzen zu Rückständen, wie beispielsweise Kalk. Zwar wird in den Wasserbädern typischerweise entkalktes Wasser eingesetzt. Das Verdampfen des entkalkten Wassers erfolgt aber dennoch nicht vollkommen rückstandsfrei.

Erfolgt das Verdampfen von Wasser auf der Walzenoberfläche über einen längeren Zeitraum, kann die Walze durch die Ablagerungen dauerhaft geschädigt werden, insbesondere da ein mechanisches Abreinigen der Walzen nicht möglich ist, da dies zu Kratzern in der Walzenoberfläche und mithin zu einer schlechten Folienqualität führen würde.

Bekannte Wasserentfernungsvorrichtungen, die die Folie trocknen bevor diese der Reckanlage zugeführt wird, erreichen oftmals einen ungenügenden Trocknungsgrad der Folie. Zudem sind bekannte Wasserentfernungsvorrichtungen für hohe Produktionsgeschwindigkeiten von beispielsweise zumindest 140 m/min (an der Kühlwalze gemessen), wie diese neuerdings gefordert werden, ungeeignet. Denn die hohen Produktionsgeschwindigkeiten führen einerseits dazu, dass die Folie mehr Wasser aus dem Wasserbad verschleppt und zugleich weniger Zeit zur Verfügung steht, um das Wasser von der Folie zu entfernen. Die Folge ist, dass insbesondere bei hohen Produktionsgeschwindigkeiten das Wasser nicht im ausreichenden Maß von der Folie entfernt wird und schließlich in die Reckanlage gelangt.

### Beschreibung der Erfindung

Es ist daher Aufgabe der vorliegenden Erfindung, eine verbesserte Wasserentfernungsvorrichtung für die Folienherstellung bereitzustellen.

Die Aufgabe wird durch eine Wasserentfernungsvorrichtung nach Anspruch 1, sowie durch die anspruchsgemäße Cast-Vorrichtung und die anspruchsgemäße Anlage zur Herstellung einer Folie gelöst der weiteren Ansprüche gelöst. Weitere Aspekte der Erfindung sind in den abhängigen Ansprüchen, sowie in der nachfolgenden Beschreibung beschrieben.

Insbesondere wird die Aufgabe durch eine Wasserentfernungsvorrichtung zur Entfernung von Wasser von einer Folie gelöst. Die Wasserentfernungsvorrichtung kann insbesondere bei der Cast-Folienherstellung eingesetzt werden.

Die Wasserentfernungsvorrichtung umfasst eine Folieneintrittsöffnung und eine Folienaustrittsöffnung und ist dazu eingerichtet, die Folie entlang einer Folienbahn von der Folieneintrittsöffnung zur Folienaustrittsöffnung zu führen. Die Folienbahn ist dabei die Bahn, die die Folie beim Durchlaufen der Wasserentfernungsvorrichtung nimmt. Sie wird insbesondere durch die Positionierung von Walzen, wie Umlenkwalzen, Nipwalzen, Anpresswalzen und/oder dergleichen bestimmt. Die Walzen können angetriebene Walzen sein, oder nichtangetriebene Walzen. Vorzugsweise ist zumindest eine angetriebene Anpresswalze vorgesehen, die dazu eingerichtet ist, die Folie durch die Wasserentfernungsvorrichtung zu fördern.

Die Wasserentfernungsvorrichtung umfasst zumindest eine mechanische Wasserentfernungseinrichtung und zumindest eine erste Abblasvorrichtung und eine zweite Abblasvorrichtung. Das Wasser kann also auf zwei unterschiedliche Arten, d.h. mechanisch und durch abblasen, von der Oberfläche der Folie entfernt werden. Hierdurch wird eine besonders hohe Wasserentfernungsrate auch bei hohen Foliengeschwindigkeiten erreicht. Die Abblasvorrichtungen sind der mechanischen Wasserentfernungseinrichtung vorzugsweise nachgeschalten, d.h. in Folienabzugsrichtung nach der mechanischen Wasserentfernungseinrichtung angeordnet.

Die mechanische Wasserentfernungseinrichtung umfasst zumindest zwei Wasserentfernungselemente, die auf gegenüberliegenden Seiten der Folienbahn sich gegenüberliegend angeordnet sind. Beispielsweise ist ein erstes Wasserentfernungselement auf der Oberseite der Folienbahn und ein zweites Wasserentfernungselement auf der Oberseite der Folienbahn angeordnet, sodass die beiden Wasserentfernungselemente die Folie zwischen sich führen.

Durch die Wasserentfernungselemente wird eine Quetschkraft auf die Folie aufgebracht. Diese Quetschkraft hat zur Folge, dass auf der Oberseite der Folie befindliches Wasser abgequetscht und somit mechanisch entfernt wird.

Die mechanische Wasserentfernungseinrichtung bildet beispielsweise eine erste Wasserentfernungsstufe der Wasserentfernungsvorrichtung. In diesem Fall kann Sie nach der Eintrittsöffnung der Wasserentfernungsvorrichtung angeordnet sein.

Optional kann eine zweite mechanische Wasserentfernungseinrichtung vorgesehen sein, die der ersten mechanischen Wasserentfernungseinrichtung beispielsweise nachgeschalten ist. Die zweite mechanische Wasserentfernungseinrichtung weist ebenso zwei Wasserentfernungselemente auf, die auf gegenüberliegenden Seiten der Folienbahn sich gegenüberliegend angeordnet sind. Diese beiden Wasserentfernungselemente sind dazu eingerichtet auf die Folie eine Quetschkraft aufzubringen. Somit kann an einer zweiten Position der Folienbahn, die von der ersten Position verschieden ist, verbleibendes Wasser von der Oberseite der Folie abgequetscht und somit mechanisch entfernt werden.

Die Wasserentfernungselemente der ersten und/oder zweiten Wasserentfernungseinrichtung können beispielsweise als Abquetschwalzen ausgebildet sein. Die sich gegenüberliegenden Abquetschwalzen bilden eine Abquetschwalzenpaarung durch die die Folie hindurchgeführt wird. Hierbei findet eine mechanische Wasserentfernung statt.

Die Abquetschwalzen können mit einem elastischen Material, wie Gummi, Silikon, TPU (Thermoplastische Polyurethane) oder dergleichen beschichtet sein. Hierdurch wird die Wasserabquetschwirkung erhöht.

Weiterhin kann eine Abquetschwalzenpaarung zwei gleichgroße Walzen oder unterschiedlich große Walzen umfassen. Die Walzen weisen beispielsweise einen Durchmesser im Bereich von 100 mm bis 200 mm, oder im Bereich von 120 mm bis 180 mm, oder im Bereich von 140 mm bis 160 mm auf. Es hat sich gezeigt, dass hierdurch eine gute Wasserabquetschwirkung erreicht werden kann.

Weiterhin kann zumindest eine Abquetschwalze der ersten und/oder zweiten Wasserentfernungseinrichtung mit einem Stellantrieb gekoppelt sein. Insbesondere kann zumindest eine Abquetschwalze einer Abquetschwalzenpaarung mit einem Stellantrieb gekoppelt sein. Der Stellantrieb kann einen Linearantrieb umfassen, oder einen Hebel, der ein Verschwenken der Abquetschwalze ermöglicht. Über den Stellantrieb kann die Quetschkraft und/oder ein Umschlingungswinkel der Walze eingestellt werden. Eine nicht mit einem Stellantrieb gekoppelte Abquetschwalze einer Abquetschwalzenpaarung kann beispielsweise federnd gelagert sein.

Die erste Abblasvorrichtung der erfindungsgemäßen Wasserentfernungsvorrichtung umfasst zumindest eine erste Abblasdüse und zumindest eine zweite Abblasdüse. Die erste(n) Abblasdüse(n) ist/sind auf einer ersten Seite der Folienbahn und die zweite(n) Abblasdüse(n) ist/sind auf einer zweiten Seite der Folienbahn angeordnet.

Entsprechend umfasst die zweite Abblasvorrichtung der erfindungsgemäßen Wasserentfernungsvorrichtung zumindest eine erste Abblasdüse und zumindest eine zweite Abblasdüse. Die erste(n) Abblasdüse(n) ist/sind auf einer ersten Seite der Folienbahn und die zweite(n) Abblasdüse(n) ist/sind auf einer zweiten Seite der Folienbahn angeordnet.

Die Abblasdüsen sind dazu eingerichtet, einen Luftstrom auf die Folie zu richten, um mitgeschlepptes Wasser von der Folie über zumindest einen Folienrand abzublasen. Das Wasser wird also von der Folienmitte über den linken und/oder rechten Folienrand abgeblasen.

Da die ersten Abblasdüsen der ersten und zweiten Abblasvorrichtung auf einer ersten Seite der Folienbahn angeordnet sind, kann eine erst Seite der Folie an zwei unterschiedlichen Positionen abgeblasen werden. Spätestens nach dem Passieren der zweiten Abblasvorrichtung ist die erste Seite der Folie (nahezu vollständig) frei von Wasser. Entsprechend gilt dies für die zweiten Abblasdüsen der ersten und zweiten Abblasvorrichtung die an unterschiedlichen Positionen auf einer zweiten Seite der Folienbahn angeordnet sind.

Zumindest einer Abblasdüse (oder mehreren Abblasdüsen, oder allen Abblasdüsen) kann eine Abblaswalze zugeordnet sein. Die zugeordnete Abblaswalze ist der Abblasdüse gegenüberliegend angeordnet (d.h. auf der jeweils gegenüberliegenden Seite der Folienbahn), um die Folie in dem Bereich zu stützen, der von der Abblasdüse abgeblasen wird. Somit ist es möglich einen Luftstrom auf die Folie zu richten, der einen ausreichend hohen Druck und/oder eine ausreichend hohe Strömungsrate aufweist, um das Wasser effektiv abzublasen, ohne dabei die Folie dauerhaft zu verformen.

Die zumindest eine Abblasdüse kann eine Schlitzdüse sein, die im Wesentlichen quer zur Abzugsrichtung der Folienbahn orientiert ist. In diesem Fall ist die Schlitzdüse parallel zur Querrichtung der Folienbahn ausgerichtet. Alternativ kann die Schlitzdüse mit der Querrichtung der Folienbahn einen Winkel β einschließen, der im Bereich von 1° bis 45°, oder im Bereich von 10° bis 30°, oder im Bereich von 15° bis 20° liegt.

Die Breite der Schlitzdüse kann dabei so gewählt sein, dass sie im Wesentlichen die ganze Folienbahn in Querrichtung überspannt. Ebenso ist es möglich, dass mehrere erste (bzw. zweite) Abblasdüsen in einer Abblasvorrichtung vorgesehen sind. Diese können so angeordnet sein, dass sie zusammen die ganze Folienbahn in Querrichtung überspannen, wobei sich Randbereiche der Abblasdüsen überlappen können. Ebenso ist es möglich mehrere Abblasdüsen in einer Abblasvorrichtung vorzusehen, die in Abzugsrichtung aufeinanderfolgend angeordnet sind.

Die Schlitzdüse kann zumindest einen Luftstromaustrittsspalt umfassen, der dazu eingerichtet ist, einen gleichmäßigen, im Wesentlichen laminaren Luftstrom zu erzeugen. Dieser kann so auf die Folie gerichtet sein, dass Wasser über einen oder beide Folienränder abgeblasen wird.

Um dies zu erreichen, kann die Schlitzdüse dazu eingerichtet sein, den Luftstrom so auf die Folie zu lenken, dass dieser eine Strömungskomponente in Querrichtung aufweist. Insbesondere kann der Luftstrom gegenüber einer Folienbahnnormalen geneigt sein, wobei der Winkel, den der Luftstrom mit der Folienbahnnormalen einschließt im Bereich von 1° bis 5°, oder im Bereich von 2° bis 4 ° liegen kann. Die Neigung des Luftstroms kann durch eine entsprechende Neigung der Schlitzdüse und/oder durch eine entsprechende Gestaltung des Luftstromaustrittsspalts erreicht werden. Durch die Neigung wird ein besonderes effektives Abblasen erreicht.

Die Wasserentfernungsvorrichtung kann weiterhin zumindest eine linke und/oder rechte Rand-Abblasvorrichtung umfassen, welche der ersten und zweiten Abblasvorrichtung nachgeschalten ist/sind. Die linke Rand-Abblasvorrichtung ist dabei einem linken Folienrand zugeordnet ist und die rechte Rand-Abblasvorrichtung ist einem rechten Folienrand zugeordnet.

Die Rand-Abblasvorrichtungen können jeweils eine erste Rand-Abblasdüse und zumindest eine zweite Rand-Abblasdüse umfassen. Die erste Rand-Abblasdüse ist dabei auf einer ersten Seite der Folienbahn und die zweite Rand-Abblasdüse auf einer zweiten Seite der Folienbahn, gegenüberliegend der ersten Rand-Abblasdüse angeordnet. Die erste und zweite Rand-Abblasdüse sind somit auf gegenüberliegenden Seiten der Folienbahn an im Wesentlichen gleichen Positionen angeordnet. Die Rand-Abblasvorrichtung bläst ausschließlich einen Folienrand ab. Der hier erzeugte Luftstrom überstreift also nicht die gesamte Folie, sondern nur deren Randbereiche. Somit kann etwaiges am Folienrand anheftendes Wasser abgeblasen werden.

Weiterhin kann die Wasserentfernungsvorrichtung zumindest eine Lufttrocknungs- und/oder Lufttemperierungsvorrichtung umfassen. Diese kann dazu eingerichtet sein, Luft, die der ersten Abblasvorrichtung, der zweiten Abblasvorrichtung, der linken Rand-Abblasvorrichtung und/oder der rechte Rand-Abblasvorrichtung zugeführt wird, um einen Luftstrom zu erzeugen, mit einer definierten Luftfeuchte und/oder Temperatur bereitzustellen.

Die Lufttrocknungs- und/oder Lufttemperierungsvorrichtung kann den unterschiedlichen Abblasvorrichtungen Luft mit unterschiedlicher Temperatur und/oder Luftfeuchte bereitstellen, oder es können mehrere Lufttrocknungs- und/oder Lufttemperierungsvorrichtungen vorgesehen sein, die jeweils einer der Abblasvorrichtungen zugeordnet sind.

Beispielsweise kann die Lufttrocknungs- und/oder Lufttemperierungsvorrichtung der ersten Abblasvorrichtung Luft mit einer Temperatur T1, der zweiten Abblasvorrichtung Luft mit einer Temperatur T2 und den Rand-Abblasvorrichtungen Luft mit einer Temperatur T3 bereitstellen, wobei beispielsweise die folgende Beziehung gilt:

$$T1 \leq T2 \leq T3$$

Dies hat den Vorteil, dass die Folie für die sich typischerweise anschließende Längs- und/oder Querverstreckung bereits (vor-)temperiert wird.

Weiterhin kann die die Lufttrocknungs- und/oder Lufttemperierungsvorrichtung einen Filter umfassen, sodass gefilterte Luft an die Abblasvorrichtungen bereitgestellt werden kann.

Weiterhin kann die erste Abblasvorrichtung, die zweite Abblasvorrichtung, die linke Rand-Abblasvorrichtung und/oder die rechte Rand-Abblasvorrichtung dazu eingerichtet sein, den Luftstrom mit einer definierten Luftstromrate und/oder einem definierten Druck bereitzustellen.

Beispielsweise kann die zweite Abblasvorrichtung einen Luftstrom bereitstellen, der eine höhere Luftstromrate und/oder einen höheren Druck aufweist, als der Luftstrom, der von der ersten Abblasvorrichtung bereitgestellt wird. Der von den Rand-Abblasvorrichtungen bereitgestellte Luftstrom kann einen nochmals gesteigerten Druck und/oder eine nochmals gesteigerte Luftstromrate aufweisen.

Ebenso ist es möglich, dass die zweite Abblasvorrichtung einen Luftstrom bereitstellt, der eine niedrigere Luftstromrate und/oder einen niedrigeren Druck aufweist, als der Luftstrom, der von der ersten Abblasvorrichtung bereitgestellt wird. Der von den Rand-Abblasvorrichtungen bereitgestellte Luftstrom kann einen nochmals reduzierten Druck und/oder eine nochmals reduzierte Luftstromrate aufweisen.

In einem Aspekt stellt die erste Abblasvorrichtung einen Luftstrom mit einem ersten Druck und einer ersten Luftstrommenge bereit. Der erste Druck kann beispielsweise in einem Bereich von 0.5 bis 1.1 bar, oder in einem Bereich von 0.6 bis 0.8 bar liegen. Die erste Luftstrommenge kann beispielsweise im Bereich von 1000 $m^3$/h bis 1600 $m^3$/h, oder im Bereich von 1200 $m^3$ bis 1400 $m^3$/h liegen. Die zweite, nachfolgende Abblasvorrichtung könnte dann einen zweiten Luftstrom mit einem zweiten Druck und einer zweiten Luftstrommenge bereitstellen, wobei der zweite Druck erhöht und die zweite Luftstrommenge reduziert ist. Diese Druck- und bzw. Luftstrommengenverteilung ermöglicht es bei der ersten Abblasvorrichtung einen Hauptteil des Wassers von der Folienoberfläche abzublasen. Die verbleibende Feuchtigkeit bzw. verbleibende Tröpfchen können dann (mit viel Druck) in der zweiten Abblasvorrichtung entfernt werden.

Die Wasserentfernungsvorrichtung kann weiterhin einen Hauptkörper und zumindest ein Klappenelement umfassen. Vorzugsweise umfasst die Wasserentfernungsvorrichtung zumindest zwei Klappenelemente.

Das zumindest eine Klappenelement ist verschwenkbar am Hauptkörper angeordnet, um von einer ersten Stellung in eine zweite Stellung verschwenkt zu werden, wobei in der ersten Stellung die Wasserentfernungsvorrichtung in einer Betriebsposition ist und in einer zweiten Stellung in einer Wartungsposition. In der Wartungsposition kann beispielsweise eine Folie in die Wasserentfernungsvorrichtung eingelegt werden, oder es kann nach einer Störung - wie einem Folienabriss - Folie aus der Wasserentfernungsvorrichtung entnommen werden. Hierzu ist der Hauptkörper entlang der Folienbahn von dem zumindest einen Klappenelement getrennt.

Weiterhin kann die Wasserentfernungsvorrichtung ein Luftabsaugung umfassen, die dazu eingerichtet ist feuchte Luft aus dem Gehäuse der Wasserentfernungsvorrichtung abzusaugen. Somit kann die Effizienz der Wasserentfernungsvorrichtung weiter gesteigert werden.

Die Aufgabe wird weiterhin von einer Cast-Vorrichtung zur Kunststofffolienherstellung gelöst, wobei die Cast-Vorrichtung eine Kühlwalze, eine Take-Off-Walze, zumindest ein Wasserbad und eine Wasserentfernungsvorrichtung der oben beschriebenen Art umfasst.

Die Kühlwalze ist dazu eingerichtet, eine auf ihre Oberfläche extrudierte Kunststoffschmelze abzukühlen, um eine Folie zu erzeugen. Die Take-Off-Walze ist der Kühlwalze nachgeschalten und dazu eingerichtet, die Folie von der Kühlwalze abzulösen. Insbesondere kann die Kühlwalze dazu eingerichtet sein, so schnell zu rotieren, dass die Folie mit einer Foliengeschwindigkeit von zumindest 120 m/min, oder zumindest 130m/min, oder zumindest 140m/min, oder zumindest 150m/min, oder zumindest 160m/min abgezogen wird.

Das zumindest eine Wasserbad ist so angeordnet, dass die Folie in der Cast-Vorrichtung durch das zumindest eine Wasserbad geführt wird. Beispielsweise kann die Kühlwalze, und optional die Take-Off-Walze, zumindest teilweise im Wasserbad angeordnet sein. Alternativ oder zusätzlich kann der Take-Off-Walze ein Wasserbad nachgeschalten sein, durch welches die Folie (z.B. über entsprechende Umlenkwalzen) geführt wird.

Die Wasserentfernungsvorrichtung ist so angeordnet, dass die Folie vor Verlassen der Cast-Vorrichtung die Wasserentfernungsvorrichtung passiert, um Wasser von der Oberfläche der Folie zu entfernen.

Weiterhin kann die Cast-Vorrichtung eine Wasseraufbereitungsanlage, insbesondere eine Entkalkungsanlage, umfassen, wobei die Wasseraufbereitungsanlage dazu eingerichtet ist das Wasser des zumindest einen Wasserbades aufzubereiten. Insbesondere können Verunreinigungen wie Kalk und/oder andere Rückstände aus dem Wasser des Wasserbades entfernt werden. Hierdurch kann die Folienqualität gesteigert werden.

Weiterhin wird die Aufgabe durch eine Anlage zur Herstellung einer Folie gelöst, wobei die Anlage zumindest eine Vorrichtung zur Bereitstellung einer Kunststoffschmelze und die obige Cast-Vorrichtung umfasst. Die Vorrichtung zur Bereitstellung einer Kunststoffschmelze kann eine Extrusionsdüse, einen Extruder und/oder einen Reaktor umfassen. Insbesondere kann die Vorrichtung zur Bereitstellung einer Kunststoffschmelze dazu eingerichtet sein die Kunststoffschmelze auf die Kühlwalze zu extrudieren.

Der Extruder kann dazu eingerichtet sein, eine Kunststoffschmelze (z.B. PE, PP, PET, ...) bereitzustellen.

Ein Reaktor kann dazu eingerichtet sein, die Kunststoffschmelze mittels Polymerisation zu erzeugen. Hierzu werden die Monomere (und optional Zusatzstoffe, wie Katalysatoren) in dem Reaktor vermischt und polymerisiert. Die entstehende polymerisierte Kunststoffschmelze kann dann an eine Extrusionsdüse bereitgestellt und auf die Kühlwalze extrudiert werden, so dass kein zusätzlicher Extruder benötigt wird.

Weiterhin kann die Anlage eine Reckanlage umfassen, welche der Cast-Vorrichtung nachgeschalten ist, und welche dazu eingerichtet ist, die Folie F in Längsrichtung und/oder Querrichtung zu verstrecken. Das Verstrecken in Längs- und Querrichtung kann simultan oder sequenziell erfolgen.

## Kurze Beschreibung der Figuren

Die Erfindung wird nachfolgend anhand der beigefügten Figuren beispielhaft näher erläutert. Hierbei zeigt

Figur 1   eine schematische Darstellung einer Anlage zur Herstellung einer Folie;

Figur 2   eine exemplarische Cast-Vorrichtung;

Figur 3   eine isometrische Darstellung einer Wasserentfernungsvorrichtung;

Figur 4   eine Schnittansicht der Wasserentfernungsvorrichtung aus Figur 3;

Fig. 5   schematisch das Abblasen der Folie in einer ersten Variante, und

Fig. 6   schematisch das Abblasen der Folie in einer zweiten Variante.

## Beschreibung der Figuren

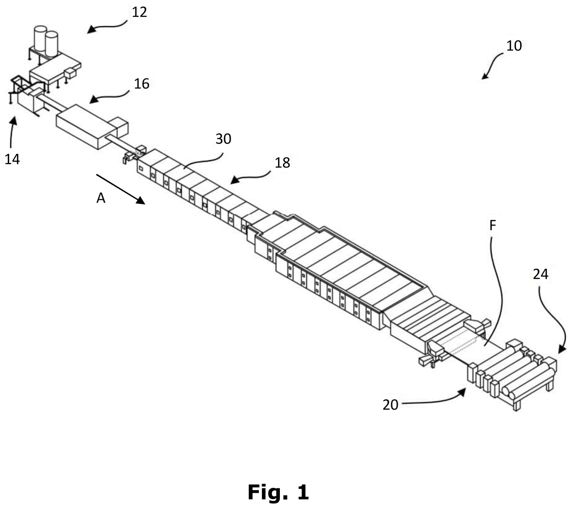

Figur 1 zeigt äußerst schematisch eine Anlage 10 zur Herstellung einer Folie F, die mehrere verschiedene Vorrichtungen und Anlagen umfasst.

Im gezeigten Beispiel weist die Anlage 10 eine Extrusionsanlage 12, eine Cast-Vorrichtung 14, zumindest eine Längsreckanlage 16 (MDO, "Machine Direction Orienter"), eine Querreckanlage 18 (TDO, "Transverse Direction Orienter"), eine optionale Behandlungsvorrichtung 20 sowie eine Wickelvorrichtung 24 auf. Die optionale Behandlungsvorrichtung 20 kann eine separate Baugruppe sein, oder beispielsweise in der Wickelvorrichtung 24 integriert sein.

Die Extrusionsanlage 12 weist zumindest einen Extruder 120 und/oder Schmelzezuleitung aus einem Reaktor auf und ist dazu eingerichtet, aus wenigstens einem Ausgangsprodukt eine Schmelze zu erzeugen. Das Ausgangsprodukt kann beispielsweise Kunststoffgranulat, Kunststoffpulver, Kunststoffrezyklat, Zusatzstoffe und/oder dergleichen umfassen.

Der zumindest eine Extruder kann ein Einschneckenextruder, ein Kaskadenextruder, ein Doppelschneckenextruder, ein Planetwalzenextruder und/oder dergleichen sein. Denkbar ist auch, dass andere Misch- und Aufbereitungsaggregate, wie ein z.B. Ko-Kneter verwendet werden.

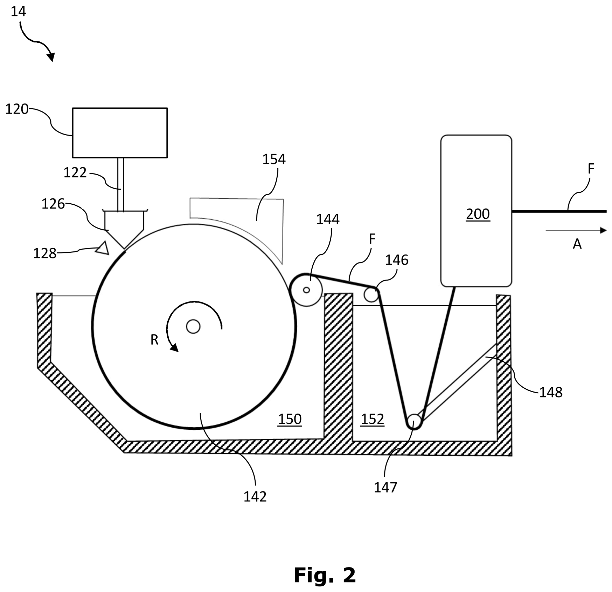

Mittels einer Extrusionsdüse, wie beispielsweise einer Breitschlitzdüse 126 wird die erzeugte Schmelze (über eine optionale Schmelzezuleitung 122) auf eine Kühlwalze 142 der Cast-Vorrichtung 14 aufgetragen, wodurch eine Folie F erzeugt wird. Optional ist eine sogenannte Anlegevorrichtung 128 vorgesehen (s. Fig. 2), mit welcher die aus der Extrusionsdüse austretende Schmelze präzise auf die Kühlwalze aufgelegt werden und dort fixiert werden kann. Das präzise Auflegen führt zu einer gleichmäßigen Abkühlung und qualitativ hochwertigen Oberflächen der Folie.

Ebenso ist es möglich, die Kunststoffschmelze mittels Polymerisation zu erzeugen. Hierzu werden die Monomere (und optional Zusatzstoffe, wie Katalysatoren) in einem Reaktor und/oder einem Extruder vermischt und polymerisiert. Die entstehende polymerisierte Kunststoffschmelze kann mittels Schmelzeleitung 122 über die Extrusionsdüse (z.B. Breitschlitzdüse 126) auf die Kühlwalze 142 der Cast-Vorrichtung 14 aufgetragen werden, wodurch eine Folie F erzeugt wird.

Die extrudierte Folie F kann eine oder mehrere Lagen aufweisen. Denkbar ist bei einer mehrlagigen Folie, dass ein Extruder mehrere oder alle Lagen erzeugt, oder dass für jede Lage ein Extruder vorgesehen ist.

Nach dem Durchlaufen der Cast-Vorrichtung 14 wird die Folie F im hier gezeigten Beispiel einer Längsreckanlage 16 zugeführt. In dieser wird die Folie in einer ersten Richtung, d.h. in der Abzugsrichtung A, verstreckt und mithin gelängt.

Die sich anschließende Querreckanlage 18, wie sie beispielsweise in der DE 10 2021 128 332 A1 beschrieben ist, hat entlang der üblichen Bewegungs- bzw. Abzugsrichtung A der Anlage 10 einen Ofen 30 mit verschiedenen Zonen zur Temperierung der Folie F. Im Ofen 30 wird die Folie F in an sich bekannter Weise in Querrichtung, d.h. quer zur Abzugsrichtung A, gereckt.

Mithin ist die Herstellung einer mono- oder biaxial orientierten Folie möglich.

Anstelle von zwei separaten Reckanlagen 16, 18 zur Längsreckung und Querreckung kann auch eine Simultanreckanlage genutzt werden. In dieser erfolgt die Verstreckung der Folie in Längs- und Querrichtung gleichzeitig.

Die Behandlungsvorrichtung 20 ist beispielsweise eine Vorrichtung zur Aktivierung der Oberfläche der Folie F durch eine Coronabehandlung, beispielsweise um eine bessere Metallhaftung zu realisieren.

Die Wickelvorrichtung 24 dient zum Aufwickeln der erzeugten Folie F und ist die in Abzugsrichtung A letzte Vorrichtung. Sie weist eine Wickelhülse auf, auf der die Folie F aufgewickelt wird.

In Figur 2 ist die Cast-Vorrichtung 14 (auch Kühlwalzeneinheit genannt) in einer vergrößerten schematischen Ansicht dargestellt.

Die hier gezeigte Cast-Vorrichtung 14 umfasst die Breitschlitzdüse 126, die Kühlwalze 142 sowie eine Anlegevorrichtung 128.

Die Breitschlitzdüse 126 ist oberhalb der Kühlwalze 142 angeordnet und dazu ausgebildet, die Kunststoffschmelze kontinuierlich auf die Kühlwalze 142 aufzutragen, die die Folie F bildet. Der verwendete Kunststoff ist insbesondere ein Polyethylen (PE), ein Polypropylen (PP), ein Polyethylenterephthalat (PET), und/oder dergleichen. Es ist auch möglich, unterschiedliche Kunststoffe zu kombinieren. Insbondere kann eine Folie unterschiedliche Kunststofflagen aufweisen und/oder in einer Lage können unterschiedliche Kunststoffe ko-extrudiert sein.

Die Folie F wird dann mittels der Anlegevorrichtung 128 an die Kühlwalze 142 gleichmäßig angelegt. Die Kühlwalze 142 dreht sich dabei in der Ansicht gemäß Figur 2 entgegen dem Uhrzeigersinn (Rotationsrichtung R). Die auf diese Weise erzeugte Folie F wird schließlich, im gezeigten Ausführungsbeispiel nach etwa einer dreiviertel Drehung der Kühlwalze 142, von der Kühlwalze 142 abgelöst, abgekühlt und einer Reckanlage 16, 18 zugeführt.

Zum Ablösen der Folie F von der Kühlwalze 142 umfasst die Cast-Vorrichtung 14 eine Take-Off-Walze 144, welcher mehrere Umlenkwalzen 146, 147 nachgeschaltet sind. Die Umlenkwalze 147 ist an einem Spannelement 148 angeordnet. Das Spannelement ist hier als verschwenkbarer Hebel ausgeführt. Über die Winkelstellung des Hebels kann eine Spannung der Folie F eingestellt oder geregelt werden.

Wie gezeigt, kann die Kühlwalze 142 in einem ersten Wasserbad angeordnet sein, um die extrudierte Folie F und die Kühlwalze 142 zu kühlen. Nach der Take-Off-Walze 144, welche dazu dient die extrudierte Folie F von der Kühlwalze 142 abzulösen, kann die Folie F mittels der Umlenkwalzen 146, 147 durch ein weiteres Wasserbad 152 (oder das Wasserbad 150) geführt werden, um eine weitere Abkühlung zu erreichen.

Das an der Folie F anhaftende Wasser muss vor der Verstreckung der Folie in einer Längs-, Quer- oder Simultanreckanlage 16, 18 von der Folienoberfläche entfernt werden. Dies ist nötig, um eine möglichst hohe Folienqualität zu erhalten und um Ablagerungen auf den Walzen (z.B. der Längsreckanlage 16), welche durch Verdampfen des Wassers entstehen würden, zu vermeiden.

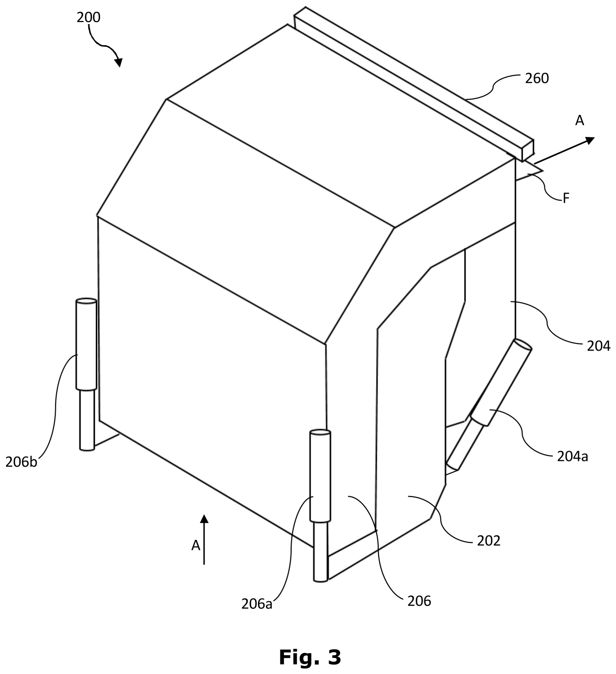

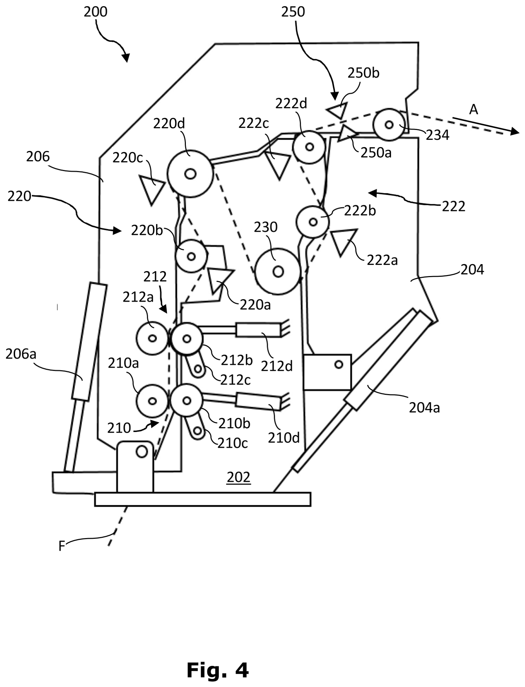

Zur Entfernung des Wassers von der Folienoberfläche ist eine Folientrocknungsvorrichtung 200 vorgesehen. Eine exemplarische Folientrocknungsvorrichtung 200 ist mit Bezug auf die Figuren 3 und 4 nachstehend beschrieben.

Weiterhin kann eine Wasser-Entfernungsvorrichtung 154 vorgesehen sein, welcher der Kühlwalze 142 zugeordnet ist. Diese Wasser-Entfernungsvorrichtung 154 entfernt etwaiges der Kühlwalze 142 anhaftendes Wasser, sodass die Schmelze auf eine im Wesentlichen trockene Kühlwalze 142 extrudiert werden kann. Hierzu kann die Wasser-Entfernungsvorrichtung 154 zumindest eine Wasserabstreifeinrichtung, zumindest ein Gebläse, zumindest eine Abblasdüse (insbesondere eine Luftmesserdüse) und/oder dergleichen umfassen.

Figur 3 zeigt eine isometrische Darstellung einer Wasserentfernungsvorrichtung 200, und Figur 4 zeigt eine Schnittansicht der Wasserentfernungsvorrichtung 200.

Die Wasserentfernungsvorrichtung 200 umfasst einen Hauptkörper 202, ein erstes Klappenelement 204 und ein zweites Klappenelement 206. Die Klappenelemente 204, 206 sind verschwenkbar am Hauptkörper 202 angeordnet und können von einer ersten (hier dargestellten) Stellung in eine zweite Stellung verschwenkt werden. In der ersten Stellung ist die Wasserentfernungsvorrichtung in einer Betriebsposition. In der zweiten Stellung ist die Wasserentfernungsvorrichtung in einer Wartungsposition. Durch das Verschwenken der Klappenelemente 204 ,206 kann die Wasser-entfernungsvorrichtung 200 geöffnet werden. Die ermöglicht u.a. das Einlegen einer Folie F entlang der Folienbahn.

Wie insbesondere in der Schnittansicht der Fig. 4 gezeigt ist, ist der Hauptkörper 202 entlang der Folienbahn von den beiden Klappenelementen 204, 206 getrennt.

Das Verschwenken des ersten Klappenelements 204 kann über einen Antrieb, insbesondere einen Hydraulikantrieb 204a aktuiert werden. Das Verschwenken des zweiten Klappenelements 206 kann ebenso über einen Antrieb, insbesondere die Hydraulikantrieb 206a, 206b aktuiert werden.

Im gezeigten Ausführungsbeispiel wird die Folie F durch eine Folieneintrittsöffnung (in Fig. 3, unten) in die Wasserentfernungsvorrichtung 200 geführt und dort entlang der Folienbahn in Abzugsrichtung A durch die Wasserentfernungsvorrichtung 200 geführt. An einer Folienaustrittsöffnung (in Fig. 3, nach rechts hinten weisend) verlässt die Folie die Wasser-entfernungsvorrichtung 200 wieder. Benachbart zur Folienaustrittsöffnung ist ein angetriebene Nipwalze 234 vorgesehen (s. Fig. 4).

Diese kann die Folie - auch nach einem Abriss - durch die Wasserentfernungsvorrichtung 200 ziehen. Weiterhin kann eine Querschneidvorrichtung 260 vorgesehen sein, die dazu eingerichtet ist, die Folie nach dem Passieren der Folienaustrittsöffnung in Querrichtung zu schneiden.

Fig. 4 zeigt eine Wasserentfernungsvorrichtung 200 in einer Schnittansicht. Die die Wasserentfernungsvorrichtung 200 umfasst eine erste mechanische Wasserentfernungseinrichtung 210, eine zweite mechanische Wasserentfernungseinrichtung 212, eine erste Abblasvorrichtung 220 und eine zweite Abblasvorrichtung 222, die in dieser Reihenfolge von der Folie F passiert werden. Nach der zweite Abblasvorrichtung 222 ist eine Rand-Abblasvorrichtung 250 vorgesehen.

Die erste mechanische Wasserentfernungseinrichtung 210 umfasst im hier gezeigten Beispiel zwei Abquetschwalzen 210a, 210b, die auf gegenüberliegenden Seiten der Folienbahn sich gegenüberliegend angeordnet sind. Die sich gegenüberliegenden Abquetschwalzen 210a, 210b bilden eine Abquetschwalzenpaarung durch die die Folie F hindurchgeführt wird. Hierbei findet eine mechanische Wasserentfernung statt.

Die Abquetschwalze 210b ist an einem Hebel 210c angeordnet und mit einem Stellantrieb 210d gekoppelt. Über den Stellantrieb 210b kann die Quetschkraft und/oder ein Umschlingungswinkel der Abquetschwalze 210b eingestellt werden. Die Abquetschwalze 210a ist federnd gelagert.

Die zweite mechanische Wasserentfernungseinrichtung 212 umfasst im hier gezeigten Beispiel ebenso zwei Abquetschwalzen 212a, 212b, die auf gegenüberliegenden Seiten der Folienbahn sich gegenüberliegend angeordnet sind. Die sich gegenüberliegenden Abquetschwalzen 212a, 212b bilden eine Abquetschwalzenpaarung durch die die Folie F hindurchgeführt wird. Hierbei findet eine weitere mechanische Wasserentfernung statt.

Die Abquetschwalze 212b ist an einem Hebel 212c angeordnet und mit einem Stellantrieb 212d gekoppelt. Über den Stellantrieb 212b kann die Quetschkraft und/oder ein Umschlingungswinkel der Abquetschwalze 212b eingestellt werden. Die Abquetschwalze 212a ist federnd gelagert.

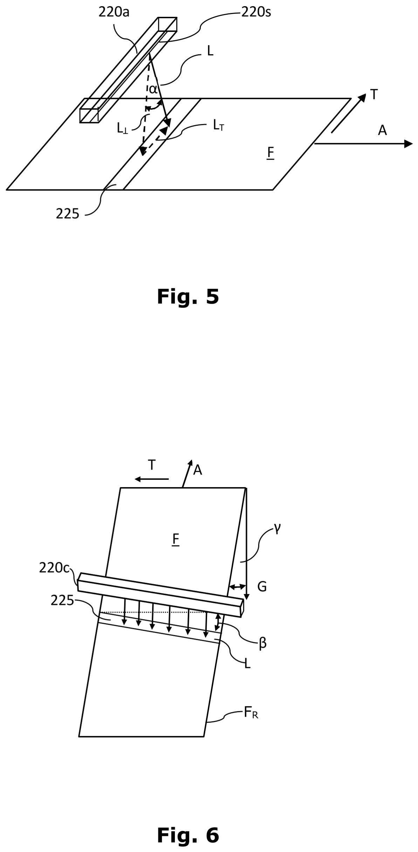

Die erste Abblasvorrichtung 220, welche hier der zweiten mechanische Wasserentfernungseinrichtung 212 nachgeschalten ist, umfasst eine erste Abblasdüse 220a und eine zweite Abblasdüse 220c. Die erste Abblasdüse 220a ist auf einer ersten Seite der Folienbahn und die zweite Abblasdüse 220c auf einer zweiten Seite der Folienbahn angeordnet. Jeweils gegenüberliegend zu den Abblasdüsen, welche hier als Schlitzdüsen ausgebildet sein können (s. auch Fig. 5), ist jeweils eine Abblaswalze 220b, 220d angeordnet. Die Abblasdüsen 220a, 220c sind dazu eingerichtet sind, einen Luftstrom auf die Folie F zu richten, um mitgeschlepptes Wasser von der Folie F über zumindest einen Folienrand (links und/oder rechts) abzublasen.

Über eine Umlenkwalze 230 wird die Folie F zu der zweiten Abblasvorrichtung 222 geleitet. Die Umlenkwalze 230 kann angetrieben sein, um die Folie zu fördern.

Die zweite Abblasvorrichtung 222, umfasst eine erste Abblasdüse 222a und eine zweite Abblasdüse 222c. Die erste Abblasdüse 222a ist auf einer ersten Seite der Folienbahn und die zweite Abblasdüse 222c auf einer zweiten Seite der Folienbahn angeordnet. Jeweils gegenüberliegend zu den Abblasdüsen, welche hier als Schlitzdüsen ausgebildet sein können (s. auch Fig. 5), ist jeweils eine Abblaswalze 222b, 222d angeordnet. Die Abblasdüsen 222a, 222c sind dazu eingerichtet sind, einen Luftstrom auf die Folie F zu richten, um noch auf der Folie befindliches Wasser von der Folie F über zumindest einen Folienrand (links und/oder rechts) abzublasen.

Nach dem Durchlaufen der zweiten Abblasvorrichtung 222 kann die Folie optional an Rand-Abblasvorrichtungen 250 vorbeigeführt werden. Es kann je eine Rand-Abblasvorrichtung für den linken Folienrand und den rechten Folienrand vorgesehen sein.

Die Rand-Abblasvorrichtungen umfassen jeweils eine erste Rand-Abblasdüse 250a und zumindest eine zweite Rand-Abblasdüse 250b. Die erste Rand-Abblasdüse 250a ist dabei auf der ersten Seite der Folienbahn und die zweite Rand-Abblasdüse 250b auf der zweiten Seite der Folienbahn, gegenüberliegend der ersten Rand-Abblasdüse 250a angeordnet. Die Rand-Abblasvorrichtung bläst ausschließlich den entsprechenden Folienrand ab. Der hier erzeugte Luftstrom überstreift also nicht die gesamte Folie F, sondern nur deren Randbereiche. Somit kann etwaiges am Folienrand anheftendes Wasser abgeblasen werden.

Figur 5 zeigt schematisch das Abblasen der Folie mittels eine Abblasvorrichtung, welche eine Abblasdüse 220a umfasst. Die Abblasdüse 220a ist hier schematisch dargestellt und als Schlitzdüse ausgebildet. Sie umfasst einen Luftstromaustrittsspalt 220s umfassen. Der Luftstromaustrittsspalt 220s ist dazu eingerichtet, einen gleichmäßigen, im Wesentlichen laminaren Luftstrom L zu erzeugen. Dieser ist so auf die Folie gerichtet, dass Wasser über einen oder beide Folienränder abgeblasen wird.

Um dies zu erreichen, kann die Schlitzdüse dazu eingerichtet sein, den Luftstrom L so auf die Folie F zu lenken, dass dieser eine Strömungskomponente $L_T$ in Querrichtung T aufweist. Insbesondere kann der Luftstrom gegenüber einer Folienbahnnormalen $L_\perp$ geneigt sein, wobei der Winkel $\alpha$, den der Luftstrom L mit der Folienbahnnormalen $L_\perp$ einschließt im Bereich von 1° bis 5° liegt. Der Luftstrom L ist hier nur durch einen Pfeil mit durchgezogener Linie dargestellt. Es versteht sich jedoch, dass der Luftstrom über die gesamte Breite des Luftstromaustrittsspalts austritt und so den 225 Abblasbereich überstreicht.

In Figur 6 ist das Abblasen der Folie F mittels einer weiteren Abblasvorrichtung, welche eine Abblasdüse 220c umfasst gezeigt. In dieser Ausführungsform wird die Folie F aufwärts gefördert. Die Abzugsrichtung A ist gegenüber der Vertikalen G um den Winkel $\gamma$ geneigt. Somit kann mitgeschlepptes Wasser bereits durch die Gewichtskraft von der Folie abfließen. Die Abblasdüse 220c ist dazu eingerichtet, einen gleichmäßigen, im Wesentlichen laminaren Luftstrom L zu erzeugen. Dieser ist so auf die Folie F gerichtet, dass Wasser zurückgehalten und somit abgeblasen wird. Zudem kann die Abblasdüse 220c zur Querrichtung der Folie T um den Winkel $\beta$ quer gestellt sein. Diese schräge Ausrichtung der Abblasdüse und mithin des Abblasbereichs 225 ermöglicht es, das mitgeschleppte Wasser über den Folienrand $F_R$ abzublasen.

## Bezugszeichenliste

| | |
|---|---|
| 10 | Anlage zur Herstellung einer Folie F |
| 12 | Extrusionsanlage |
| 14 | Cast-Vorrichtung |
| 16 | Längsreckanlage |
| 18 | Querreckanlage |
| 20 | Behandlungsvorrichtung |
| 24 | Wickelvorrichtung |
| 30 | Ofen |
| | |
| 120 | Extruder |
| 122 | Schmelzezuleitung |
| 126 | Breitschlitzdüse |
| 128 | Anlegevorrichtung |
| | |
| 142 | Kühlwalze |
| 144 | Take-Off-Walze |
| 146 | Umlenkwalze |
| 147 | Umlenkwalze |
| 148 | Spannelement |
| 150 | Wasserbad |
| 152 | Wasserbad |
| 154 | Wasserentfernungsvorrichtung für die Kühlwalze |
| | |
| 200 | Wasserentfernungsvorrichtung für die Folie |
| 202 | Hauptkörper |
| 204 | Klappenelement |
| 204a | Antrieb |
| 206 | Klappenelement |
| 206a | Antrieb |
| 206b | Antrieb |
| 210 | mechanische Wasserentfernungseinrichtung (Abquetschwalzenpaarung) |
| 210a | Abquetschwalze |
| 210b | Abquetschwalze |
| 210c | Hebel |
| 210d | Stellantrieb |
| 212 | mechanische Wasserentfernungseinrichtung (Abquetschwalzenpaarung) |
| 212a | Abquetschwalze |

212b   Abquetschwalze
212c   Hebel
212d   Stellantrieb
220   erste Abblasvorrichtung
220a   Abblasdüse (erste Seite)
220b   Abblaswalze
220c   Abblasdüse (zweite Seite)
220d   Abblaswalze
220s   Luftstromaustrittsspalt
222   zweite Abblasvorrichtung
222a   Abblasdüse (erste Seite)
222b   Abblaswalze
222c   Abblasdüse (zweite Seite)
222d   Abblaswalze
225   Abblasbereich
230   Umlenkwalze
234   Nipwalze
250   Rand-Abblasvorrichtung
250a   Blasdüse
250b   Blasdüse
260   Querschneidvorrichtung

A   Abzugsrichtung
F   Folie
G   Vertikale
R   Rotationsrichtung
T   Querrichtung
L   Luftstrom

**Patentansprüche**

1.  Wasserentfernungsvorrichtung (200) zur Entfernung von Wasser von einer Folie (F), insbesondere für die Cast-Folienherstellung, wobei

    die Wasserentfernungsvorrichtung (200) eine Folieneintrittsöffnung und eine Folienaustrittsöffnung umfasst, und dazu eingerichtet ist, die Folie (F) entlang einer Folienbahn von der Folieneintrittsöffnung zur Folienaustrittsöffnung zu führen; wobei
    die Wasserentfernungsvorrichtung weiterhin zumindest eine mechanische Wasserentfernungseinrichtung (210) umfasst, welche zumindest zwei Wasserentfernungselemente (210a, 210b) aufweist, die auf gegenüberliegenden Seiten der Folienbahn sich gegenüberliegend angeordnet sind und dazu eingerichtet sind auf die Folie (F) eine Quetschkraft aufzubringen; und wobei
    die Wasserentfernungsvorrichtung (200) weiterhin eine erste Abblasvorrichtung (220) und eine zweite Abblasvorrichtung (222) umfasst, wobei
    die erste Abblasvorrichtung (220) zumindest eine erste Abblasdüse (220a) und zumindest eine zweite Abblasdüse (220c) umfasst, wobei die erste Abblasdüse (220a) auf einer ersten Seite der Folienbahn und die zweite Abblasdüse (220c) auf einer zweiten Seite der Folienbahn angeordnet ist, und wobei
    die zweite Abblasvorrichtung (222) zumindest eine erste Abblasdüse (222a) und zumindest eine zweite Abblasdüse (222c) umfasst, wobei die erste Abblasdüse (222a) auf der ersten Seite der Folienbahn und die zweite Abblasdüse (222c) auf der zweiten Seite der Folienbahn angeordnet ist, und wobei
    die Abblasdüsen (220a, 220c; 222a, 222b) dazu eingerichtet sind, einen Luftstrom (L) auf die Folie zu richten, um mitgeschlepptes Wasser von der Folie (F) über zumindest einen Folienrand abzublasen.

2.  Wasserentfernungsvorrichtung (200) nach Anspruch 1, wobei die Wasserentfernungsvorrichtung (200) eine zweite mechanische Wasserentfernungseinrichtung (212) umfasst, die der ersten mechanischen Wasserentfernungseinrichtung (210) nachgeschaltet ist, und welche zumindest zwei Wasserentfernungselemente (212a, 212b) aufweist, die auf gegenüberliegenden Seiten der Folienbahn sich gegenüberliegend angeordnet und dazu eingerichtet sind auf die Folie (F) eine Quetschkraft aufzubringen.

3.  Wasserentfernungsvorrichtung (200) nach Anspruch 1 oder 2, wobei

    die Wasserentfernungselemente (210a, 210b; 212a, 212b) der ersten und/oder zweiten Wasserentfernungseinrichtung (210; 212) als Abquetschwalzen (210a, 210b; 212a, 212b) ausgebildet sind, wobei
    zumindest eine Abquetschwalze (210b; 212b) der ersten und/oder zweiten Wasserentfernungseinrichtung (210; 212) optional mit einem Stellantrieb (210d; 212d) gekoppelt ist.

4.  Wasserentfernungsvorrichtung (200) nach einem der Ansprüche 1 bis 3, wobei

    zumindest einer Abblasdüse (220a, 220c; 222a, 222b) eine Abblaswalze (220b, 220d; 222b, 222d) zugeordnet ist, wobei
    die zugeordnete Abblaswalze (220b, 220d; 222b, 222d) der Abblasdüse (220a, 220c; 222a, 222b) gegenüberliegend angeordnet ist, um die Folie (F) in dem Bereich (225) zu stützen, der von der Abblasdüse (220a, 220c; 222a, 222b) abgeblasen wird.

5.  Wasserentfernungsvorrichtung (200) nach einem der Ansprüche 1 bis 4, wobei zumindest eine Abblasdüse (220a, 220c; 222a, 222b) eine Schlitzdüse ist, die im Wesentlichen quer zur Folienbahn orientiert ist, oder die mit der Querrichtung (T) der Folienbahn einen Winkel β einschließt, wobei β im Bereich von 1° bis 45°, oder im Bereich von 10° bis 30°, oder im Bereich von 15° bis 20° liegt.

6. Wasserentfernungsvorrichtung (200) nach Anspruch 5, wobei die Schlitzdüse dazu eingerichtet ist, den Luftstrom (L) so auf die Folie (F) zu lenken, dass dieser eine Strömungskomponente ($L_T$) in Querrichtung (T) aufweist.

7. Wasserentfernungsvorrichtung (200) nach einem der Ansprüche 1 bis 6, wobei die Wasserentfernungsvorrichtung (200) weiterhin zumindest eine linke und/oder rechte Rand-Abblasvorrichtung (250) umfasst, welche der ersten und zweiten Abblasvorrichtung (220; 222) nachgeschalten ist, wobei die linke Rand-Abblasvorrichtung einem linken Folienrand zugeordnet ist und wobei die rechte Rand-Abblasvorrichtung einem rechten Folienrand zugeordnet ist.

8. Wasserentfernungsvorrichtung (200) nach einem der Ansprüche 1 bis 7, wobei

die Wasserentfernungsvorrichtung (200) eine Lufttrocknungs- und/oder Lufttemperierungsvorrichtung umfasst, und wobei
die Lufttrocknungs- und/oder Lufttemperierungsvorrichtung dazu eingerichtet ist, Luft, die der ersten Abblasvorrichtung (220), der zweiten Abblasvorrichtung (222), der linken Rand-Abblasvorrichtung und/oder der rechte Rand-Abblasvorrichtung (250) zugeführt wird, um einen Luftstrom zu erzeugen, mit einer definierten Luftfeuchte und/oder Temperatur bereitzustellen.

9. Wasserentfernungsvorrichtung (200) nach einem der Ansprüche 1 bis 8, wobei

die Wasserentfernungsvorrichtung (200) die erste Abblasvorrichtung (220), die zweite Abblasvorrichtung (222), die linke Rand-Abblasvorrichtung und/oder die rechte Rand-Abblasvorrichtung (250) dazu eingerichtet ist den Luftstrom mit einer definierten Luftstromrate und/oder einem definierten Druck bereitzustellen, wobei
optional die zweite Abblasvorrichtung (222) einen Luftstrom bereitstellt, der eine höhere Luftstromrate und/oder einen höheren Druck aufweist, als der Luftstrom, der von der ersten Abblasvorrichtung (220) bereitgestellt wird.

10. Wasserentfernungsvorrichtung (200) nach einem der Ansprüche 1 bis 9, wobei

die Wasserentfernungsvorrichtung (200) einen Hauptkörper (202) und zumindest ein Klappenelement (204, 206) umfasst, und wobei
das zumindest eine Klappenelement (204, 206) verschwenkbar am Hauptkörper angeordnet ist, um von einer ersten Stellung in eine zweite Stellung verschwenkt zu werden, wobei in der ersten Stellung die Wasser-entfernungsvorrichtung (200) in einer Betriebsposition ist und in der zweiten Stellung in einer Wartungsposition, und wobei
der Hauptkörper (202) entlang der Folienbahn von dem zumindest einen Klappenelement (204, 206) getrennt ist.

11. Wasserentfernungsvorrichtung (200) nach einem der Ansprüche 1 bis 10, wobei die Wasserentfernungsvorrichtung (200) eine Luftabsaugung umfasst, die dazu eingerichtet ist feuchte Luft aus dem Gehäuse der Wasserentfernungsvorrichtung (200) abzusaugen.

12. Cast-Vorrichtung (14) zur Kunststofffolienherstellung, wobei

die Cast-Vorrichtung eine Kühlwalze (142), eine Take-Off-Walze (144), zumindest eine Wasserbad (150, 152) und eine Wasserentfernungsvorrichtung (200) nach einem der vorstehenden Ansprüche 1 bis 11 umfasst, wobei
die Kühlwalze (142) dazu eingerichtet ist, eine auf ihre Oberfläche extrudierte Kunststoffschmelze abzukühlen um eine Folie (F) zu erzeugen, wobei
die Take-Off-Walze (144) der Kühlwalze (142) nachgeschalten ist und dazu eingerichtet ist, die Folie (F) von der Kühlwalze (142) abzulösen, wobei
das zumindest eine Wasserbad (150, 152) so angeordnet ist, dass die Folie (F) in der Cast-Vorrichtung (14) durch das zumindest eine Wasserbad (150, 152) geführt wird, und wobei
die Wasserentfernungsvorrichtung (200) so angeordnet ist, dass die Folie (F) vor Verlassen der Cast-Vorrichtung (14) die Wasserentfernungsvorrichtung (200) passiert, um Wasser von der Oberfläche der Folie (F) zu entfernen.

13. Cast-Vorrichtung (14) nach Anspruch 14, wobei die Cast-Vorrichtung (14) weiterhin eine Wasseraufbereitungsanlage, insbesondere eine Entkalkungsanlage, umfasst, wobei die Wasseraufbereitungsanlage dazu eingerichtet ist das Wasser des zumindest einen Wasserbades (150, 152) aufzubereiten.

14. Anlage (10) zur Herstellung einer Folie (F), wobei die Anlage (10) zumindest eine Vorrichtung zur Erzeugung einer Kunststoffschmelze, insbesondere einen Extruder (12) und/oder einen Reaktor, sowie die Cast-Vorrichtung (14) nach Anspruch 12 oder 13 umfasst, und wobei der Extruder (12) oder der Reaktor dazu eingerichtet ist, eine Kunststoffschmelze bereitzustellen und auf die Kühlwalze (142) zu extrudieren.

15. Anlage (10) zur Herstellung einer Folie (F) nach dem vorhergehenden Anspruch, wobei die Anlage (10) weiterhin eine Reckanlage (16, 18) umfasst, welche der Cast-Vorrichtung (14) nachgeschalten ist, und welche dazu eingerichtet ist, die Folie (F) in Längsrichtung und/oder Querrichtung zu verstrecken.

**Fig. 1**

**Fig. 2**

**Fig. 3**

EP 4 786 137 A1

Fig. 4

15

**Fig. 5**

**Fig. 6**

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/031752 A1 (LOHIA CORP LTD [IN]) 9. März 2023 (2023-03-09) | 1-3,5,6, 9,11,14, 15 | INV. B29C48/08 B29C48/27 |
| Y | * Seite 1, Zeilen 18-21 * * Seite 6, Zeile 26 - Seite 7, Zeile 5 * * Seite 9, Zeile 24 - Seite 10, Zeile 5 * * Seite 10, Zeile 19 - Seite 11, Zeile 11 * * Ansprüche 1-3 * * Abbildungen 1-3 * ----- | 7,10,13 | B29C48/14 B29C48/88 ADD. B08B5/02 B08B1/20 |
| X | CN 204 725 750 U (SHANDONG SISHUI KANGDE XIN COMPOSITE MATERIAL CO LTD) 28. Oktober 2015 (2015-10-28) | 1-4,8,9, 12,14,15 | |
| Y | * Absatz [0016] * * Ansprüche 1-4 * * Abbildung 1 * ----- | 7,10,13 | |
| X | CN 116 945 443 A (ZHEJIANG HUIFENG ZHIZAO TECH CO LTD) 27. Oktober 2023 (2023-10-27) * Ansprüche 1-10 * * Abbildungen 1-2 * ----- | 1,12,14, 15 | |
| Y | CN 114 888 706 A (GUANGDONG FINE YUAN SCIENCE TECH CO LTD) 12. August 2022 (2022-08-12) * Ansprüche 1-10 * * Abbildungen 1-10 * ----- | 10,13 | |
| Y | JP S61 219621 A (TEIJIN LTD) 30. September 1986 (1986-09-30) * Abbildung 4 * ----- | 7 | |
| A | CN 203 030 575 U (FURONGHUI IND FUJIAN CO LTD) 3. Juli 2013 (2013-07-03) * Abbildung 1 * ----- | 1-15 | |

**RECHERCHIERTE SACHGEBIETE (IPC)**

B29C

Der vorliegende Recherchenbericht wurde für alle Patentansprüche erstellt

| Recherchenort | Abschlußdatum der Recherche | Prüfer |
|---|---|---|
| München | 23. Juni 2026 | Ngwa, Walters |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**EP 4 786 137 A1**

## ANHANG ZUM EUROPÄISCHEN RECHERCHENBERICHT
## ÜBER DIE EUROPÄISCHE PATENTANMELDUNG NR.

**EP 25 21 5734**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**23-06-2026**

| Im Recherchenbericht angeführtes Patentdokument | Datum der Veröffentlichung | Mitglied(er) der Patentfamilie | Datum der Veröffentlichung |
|---|---|---|---|
| WO 2023031752 A1 | 09-03-2023 | KEINE | |
| CN 204725750 U | 28-10-2015 | KEINE | |
| CN 116945443 A | 27-10-2023 | KEINE | |
| CN 114888706 A | 12-08-2022 | KEINE | |
| JP S61219621 A | 30-09-1986 | JP H0354613 B2<br>JP S61219621 A | 20-08-1991<br>30-09-1986 |
| CN 203030575 U | 03-07-2013 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021128332 A1